# EUROPEAN PATENT APPLICATION

(11) **EP 1 467 524 A1**
(43) Date of publication of application: **13.10.2004**
(21) Application number: 01995043.5
(22) Date of filing: 28.12.2001
(51) Int. Cl.: H04L 12/56, H04B 7/26

(54) **ROUTING METHOD FOR MOBILE AD-HOC NETWORK**

(71) Applicant: Nokia Corporation, 02150 Espoo (FI)
(72) Inventor: SIVAKUMAR, T.V.L.N., House 201, Fukushima-Kopo, Tokyo 121-0011 (JP); CHEN, Hongyuan, Inagi-shi, Tokyo 206-0823 (JP); HUANG, Leping, Kawaguchi-shi, Saitama 332-0001 (JP); KASHIMA, Tsuyoshi, Yokohama-shi, Kanagawa 221-0075 (JP); HIRASE, Yoshiya, Tachikawa-shi, Tokyo 190-0022 (JP); CUI, Wei, Shibuya-ku, Tokyo 151-0053 (JP)
(74) Representative: Slingsby, Philip Roy
(86) International application number: PCT/JP2001/011650
(87) International publication number: WO 2003/061220

(57) **Abstract**

A node selecting method is characterized by comprising a first step of reserving a communication band on a route by seeking a communication route from a source node to a destination node through intermediate nodes by use of an ad-hoc on-demand distance vector (AODV) algorithm in a mobile ad-hoc network; a second step of storing information on communication bandwidth of a link route connecting each pair of neighboring intermediate nodes on the communication route in the intermediate nodes; and a third step of collecting information on available communication bandwidth of the communication route and transmitting it to the source node when a route reply is made from the destination node on the communication route toward the source node.

## Description

### Technical Field

The present invention relates to a routing technique, in particular, to a routing algorithm that can be suitably used in a mobile ad-hoc network (MANET), and to a routing technique using the routing algorithm.

### Background Art

A MANET is constituted by a plurality of movable nodes (hereinafter simply referred to'as nodes), in which communication is possible between arbitrary nodes through neighboring nodes.

Now, in case of transmitting a packet from a specific node (hereinafter referred to as source node S) to another specific node (hereinafter referred to as destination node D) in the MANET, a communication route to link a plurality of nodes must be established.

As a protocol used for establishment of such a communication route, a distance vector (DV) routing protocol is known.

In the DV method, first of all, each node broadcasts its own address. As a result, each node can obtain information on a node adjacent to that node (the presence of the adjacent node and the "distance" to the node). Next, such information is broadcasted in lump and thereby information on a node further adjacent to the above adjacent node can be obtained. On the basis of the obtained information, each node calculates a route to a node not directly neighboring that node, and stores the result in its own route table.

In this manner, each node propagates the route information stored in its route table to an adjacent node in order. The adjacent node updates its own route information on the basis of the newly obtained information.

Although this method has a merit that the implementation is easy, it has some demerits. That is, the information propagation is slow. Besides, the method has a problem that a huge amount of control messages are required for maintaining the route table of each node under conditions of an ad-hoc network in which conditions of nodes and links are always varying.

In addition, to establish each communication route, the same procedure must be repeated. This causes a problem that the route establishment requires a long time. As an algorithm for solving the above problems, an ad-hoc on-demand distance vector (AODV) routing protocol is known.

AODV is a broadcast-base routing algorithm like DV. However, the most characteristic feature in comparison with DV is that a route search is performed on demand. More specifically, in DV, the routes to all nodes have been found in advance and they have been stored. Contrastingly in AODV, a route search is not performed until a request to send a data packet to a destination is issued. Thus, control messages to be sent for maintaining and updating information on the routes to all nodes can be saved.

In addition, in AODV, broadcast need not be performed every time when a route is established, unlike DV. Utilizing information on a route from an intermediate node to a destination node collected by and stored in the intermediate node upon the last route search, the intermediate node sends a response as a proxy for the destination node. Thus, broadcast in the whole network is avoided. This decreases the number of broadcasts and prevents a communication band from being wastefully consumed.

Each intermediate node has a routing table. The routing table stores therein (1) the address of an adjacent node to which a route from the intermediate node can be established, and (2) the smallest number of hops through the adjacent node to the destination node D.

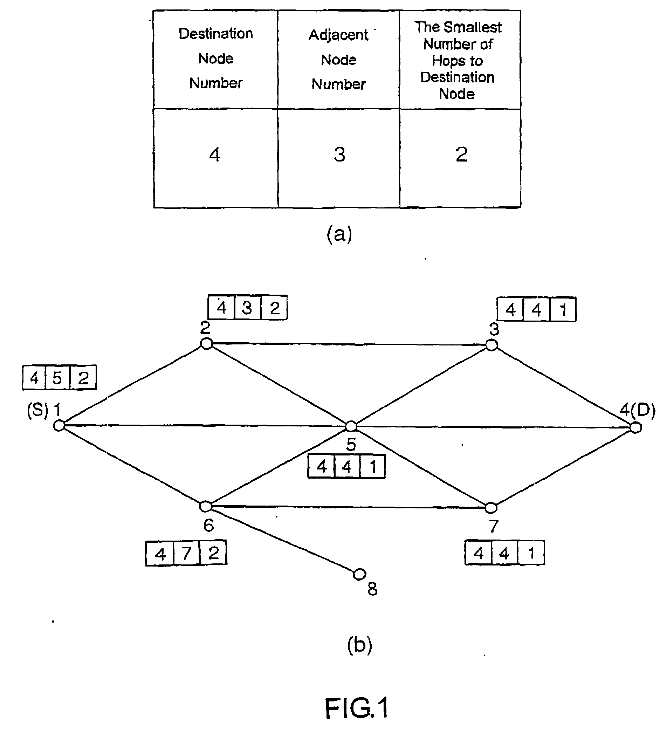

FIG. 1 shows a MANET constituted by seven nodes, in which (a) shows a format of a routing table and (b) shows the contents of the routing table of each node. The routing table shown in FIG. 1(a) shows the contents of the routing table of an intermediate node 2. In the MANET, a node 1 is the source node S and a node 4 is the destination node D.

The routing table of each node is made in the manner that the source node S first performs broadcast of a route search message packet to the adjacent intermediate nodes 2, 5, and 6, and the destination node D receives it and returns it to the source node S. In the example shown in FIG. 1, the source node S establishes a communication route of the source node 1 - the node 5 - the destination node D.

Next, if another source node 8 intends to send a data packet to the destination node 4, the node 8 sends a route request message (RREQ) to the node 6 adjacent to the node 8. Because the node 6 having received the RREQ stores therein information on the route to the node 4, the node 6 sends, as a proxy for the node 4, the stored route information as a route reply message (RREP) to the source node 8. The source node 8 having received the RREP receives the route information, updates its own routing table, and then sends, to the node 6, a data packet addressed to the node 4.

As described above, in AODV, because an intermediate node uses, as a proxy node, route information collected by broadcast of the former route search message packet and stored in its routing table, when a communication route establishment request to the same destination node is received from another node, rebroadcast need not be performed.

Therefore, the time for reestablishment of a route can be shortened, and a communication band is not wastefully consumed.

As described above, the AODV algorithm is suitable for selecting the optimum route from the source node S to the destination node D. However, the optimum route is guaranteed only as the route of the smallest number of hops. In case of communication of multimedia information such as an image, data, and audio in a MANET, the quality of service (QOS) of the communication route is in question.

That is, in accordance with media information to be transmitted, a communication route must be selected in consideration of delay and communication bandwidth.

In the above-described conventional AODV algorithm, a message to inquire QOS information in a route is not contained in a route search message. A technique for an intermediate node to collect QOS information of the route is not discussed, and the intermediate node does not collect and store QOS information as route information.

Thus, when a route for which a QOS request has been issued is newly established, a QOS route search message to inquire. QOS of the route must be sent to all nodes in the MANET. In this case, all the two characteristic features of AODV, (1) on-demand and (2) an intermediate node responds as a proxy, become ineffective. Broadcast must be performed to the nodes in the network every time, and so the efficiency is bad.

An AODV algorithm in which QOS has been taken has been proposed by Perkins et al., in a literature "Quality of Service for Ad hoc On-Demand Distance Vector Routing", IETF draft, draft-ietf-manet-qos-oo.txt, 14 July 2000.

Perkins et al., have defined some message formats for QOS routing and proposed a general idea for routing QOS packets. Also in this proposal, an intermediate node does not collect exact QOS information, in particular, bandwidth information. QOS information is collected by broadcasting. Therefore, the above-described problems can not be solved.

### Disclosure of the Invention

The present invention has been made to solve the above-described problems and has an object to provide a routing method capable of decreasing the quantity of route control packets necessary for routing, and shorting a reply time in a route search.

An object of the present invention is to provide a routing algorithm that has been extended to a route control technique capable of guaranteeing the quality of service with maintaining the characteristic features of AODV, (1) on-demand and (2) proxy response of an intermediate node, so that the quantity of control packets can be controlled within a proper range even in a large-scale network.

A route control method of the present invention is characterized by comprising a first step of reserving a communication band on a route by seeking a communication route from a source node to a destination node through intermediate nodes by use of an AODV algorithm in a mobile ad-hoc network; a second step of storing, in the intermediate nodes, information on communication bandwidth of a link route connecting each pair of mutually neighboring intermediate nodes on the communication route; and a third step of collecting information on available communication bandwidth of the communication route and transmitting it to the source node, when a route reply is made from the destination node on the communication route toward the source node.

Further, the routing method of the present invention is characterized by further comprising a fourth step in which when a route selection request is made from the source node or another source node to the intermediate node, with a bandwidth being designated, and when the available communication bandwidth of the communication route is larger than the designated bandwidth, the intermediate node makes a reply for permitting transmission with the designated bandwidth to the source node as a proxy, and which makes a confirmation reply for guaranteeing the transmission with the designated bandwidth to the intermediate nodes on the communication route toward the destination node.

Furthermore, the route control method of the present invention is characterized by further comprising a five step in which each intermediate node on the communication route updates the communication bandwidth of the link route as much as the designated bandwidth, when the confirmation reply has reached the destination node.

### Brief Description of the Drawings

FIG. 1 is for explaining a conventional, routing table of each node in a MANET; and
FIG. 2 is for explaining a routing method of the present invention.

### Best Mode for Carrying out the Invention

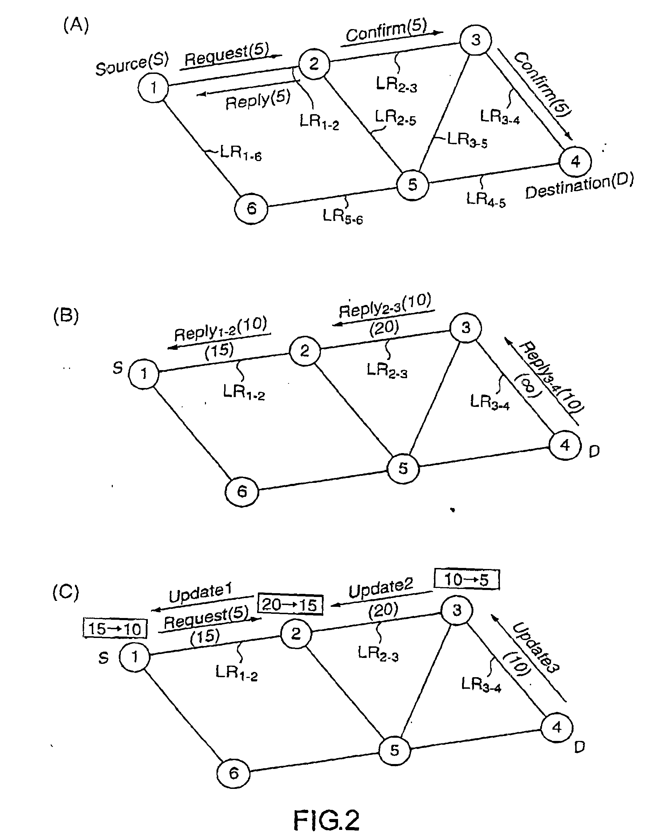

The MANET shown in FIG. 2 is constituted by six mobile nodes 1 to 6. Eight link routes LR₁₋₂, LR₂₋₃, LR₃₋₄, LR₄₋₅, LR₅₋₆, LR₁₋₆, LR₂₋₅, and LR₃₋₅ as shown in the drawing are formed between the nodes. In this example, the node 1 is the source node S and the node 4 is the destination node D.

The procedure to setting a communication route from the source node S to the destination node D and setting a proxy node is executed using a routing protocol using the above-described AODV.

As a result, the node 2 has been set as the proxy node and a route of LR₁₋₂ - LR₂₋₃ - LR₃₋₄ - LR₃₋₄ has been set as the communication route.

In the algorithm of the present invention, because a procedure of the source node S designating a communication bandwidth as QOS of the route and inquiring of the proxy node 2 is scheduled later, the nodes 1, 2, and 3 stores the bandwidths of the link routes LR₁₋₂, LR₂₋₃, and LR₃₋₄ in the routing tables of the respective nodes.

If the bandwidths of the link routes LR₁₋₂, LR₂₋₃, and LR₃₋₄ are 15 kbit/s, 20 kbit/s, and 10 kbit/s, respectively, as shown in FIG. 2(B), "15", "20", and "10" are stored in the node 1, the node 2, and the node 3 as information BW₁, BW₂, and BW₃ on the bandwidths from the node 1 to the node 2, from the node 2 to the node 3, and from the node 3 to the node 4, respectively. In the node 4 as the destination node D, "∞" is stored as information on the bandwidth to the node 4 itself.

Next, a procedure for making a route reply from the destination node D toward the source node S will be described. This route reply gives QOS information indicating what bandwidth of a packet can be transmitted through the set route LR₁₋₂ - LR₂₋₃ - LR₃₋₄ from the source node S to the destination node D. The case shown in FIG. 2 will be described. In the reply from the node 4 to the node 3, because "∞" is stored in the node 4 as bandwidth information, "∞" is transmitted as the route reply. This is shown as Reply₃₋₄ (∞) in the drawing.

Because the bandwidth of the route LR₃₋₄ is "10", the node 3 having received the above information selects the smaller bandwidth and thus stores "10" in its routing table as the bandwidth of the route to the node 4. Next, in the reply from the node 3 to the node 2, because the bandwidth of the route to the node 4, stored in the routing table of the node 3, is "10", "10" is transmitted as the route reply. This is shown as Reply₂₋₃(10) in the drawing.

Next, as for the node 2 having received the information, although "20" is given as information on the link bandwidth of the route LR₂₋₃, because the bandwidth of the route from the node 3 is "10", the smaller bandwidth is selected and stored in the routing table of the node 2 as the route bandwidth. In the reply from the node 2 to the node 1, the stored bandwidth "10" of the route to the node 4 is transmitted as the reply. This is shown as Reply₁₋₂ (10) in the drawing.

Finally, as for the node 1 having received the information, although "15" is given as information of the link bandwidth of the route LR₁₋₂, because the bandwidth of the route to the node 4, received from the node 2, is "10", the smaller bandwidth is selected and stored in the routing table of the node 1 as the route bandwidth.

In this manner, information on the minimum bandwidth that can pass through all link routes LR₁₋₂, LR₂₋₃, and LR₃₋₄ is transmitted to the source node S.

The source node S is thus given information on bandwidth as QOS information on the set communication route LR₁₋₂ - LR₂₋₃ - LR₃₋₄. Therefore, the source node S can transmit a packet of a bandwidth of 10 kbit/s or less through the communication route.

Next, a case wherein the source node S newly transmits a packet of a bandwidth of 5 kbit/s to the destination node D will be described.

A packet transmission request is issued from the source node S to the proxy node 2 as a route selection request. This is shown as Request (5) in FIG. 2(A). Because the route selection request Request (5) is smaller than the minimum bandwidth "10" of the communication route, the transmission is permitted. At this time, the proxy node 2 makes a reply to the source node S for permitting the transmission. This is shown as Reply (5) in FIG. 2(A).

Next, the proxy node 2 makes a confirmation reply to the node 3 for guaranteeing the transmission. The node 3 having received the confirmation reply makes a confirmation reply to the destination node D. Thereby, the transmission of a packet having a bandwidth "5" designated through the communication route LR₁₋₂ - LR₂₋₃ - LR₃₋₄ becomes possible.

The above-described confirmation reply is shown as Confirm (5) in FIG. 2(A). When the confirmation reply passes through the intermediate nodes 2 and 3, each node updates information on the link band between the node and the adjacent node to provide for the next packet transmission. The nodes 1, 2, and 3 update information "15", "20", and "10" on available bandwidth, stored in the respective nodes 1, 2, and 3, into "10", "15", and "5".

That is, update is performed in which the stored bandwidth of the route to the destination is reduced by the bandwidth "5" used for the packet transmission.

This update is performed on the communication route from the destination node D toward the source node S by the same procedure as the above-described procedure for the route reply, shown in FIG. 2(B).

The update to the node 3, the update to the node 2, and the update to the node 1 are shown as Update 3, Update 2, and Update 1 in FIG. 2(C), respectively.

When the update is performed, like the above-described procedure for making a route reply from the destination node D toward the source node S, the destination node D stores the bandwidth "∞" to the node itself in an Update message and transmits the message to the node 3. In the node 3, the smaller one of the LR₃₋₄ updated by a Confirm packet and the route bandwidth information contained in the Update message is selected as the bandwidth of the route to the destination node, and stored in the routing table of the node 3. Information on the bandwidth of the route to the node 4, stored in the nodes 1 and 2, is updated also by the Update packet.

As a result of the update, all available bandwidths of the routes from the nodes 1, 2, and 3 to the node 4 are updated into "5".

As described above, the present invention is characterized in that information on route bandwidth is also transmitted upon a route reply from the destination node D to the source node S.

Information on route bandwidth is stored in each intermediate node and updated in order.

In the present invention, because a packet upon a route reply is used for measuring the bandwidth of the route, no separate massage packet for control need be provided.

In addition, route information including information on bandwidth is stored in each node, and the route information is updated when each node detects a change in information on the bandwidth of a link route. Thus, the accurate bandwidth of a packet that can pass through the set communication route can be known.

In the present invention, therefore, it is guaranteed that each node has accurate route information to the destination node D. In addition, because the route information stored in each node is updated in order, it accurately reflects the current conditions of the link route.

Thus, in the present invention, the quantity of route control packets necessary for routing is reduced and a reply time in a route search is shortened.

## Claims

1. A node selecting method **characterized by** comprising:
a first step of reserving a communication band on a route by seeking a communication route from a source node to a destination node through intermediate nodes by use of an AODV algorithm in a mobile ad-hoc network;
a second step of storing, in the intermediate nodes, information on communication bandwidth of a link route connecting each pair of mutually neighboring intermediate nodes on the communication route; and
a third step of collecting information on available communication bandwidth of the communication route and transmitting it to the source node, when a route reply is made from the destination node on the communication route toward the source node.

2. The node selecting method according to claim 1, **characterized by** further comprising:
a fourth step in which when a route selection request is made from the source node or another source node to the intermediate node, with a bandwidth being designated, and when the available communication bandwidth of the communication route is larger than the designated bandwidth, the intermediate node makes a reply for permitting transmission with the designated bandwidth to the source node as a proxy, and
which makes a confirmation reply for guaranteeing the transmission with the designated bandwidth to the intermediate nodes on the communication route toward the destination node.

3. The node selecting method according to claim 2, **characterized by** further comprising:
a five step in which each intermediate node on the communication route updates the communication bandwidth of the link route as much as the designated bandwidth, when the confirmation reply has reached the destination node.
